# EUROPÄISCHE PATENTSCHRIFT

(11) **EP 2 448 712 B1**
(45) Veröffentlichungstag und Bekanntmachung des Hinweises auf die Patenterteilung: **13.03.2013**
(21) Anmeldenummer: 09777237.0
(22) Anmeldetag: 16.07.2009
(51) Int. Cl.: B23Q 1/01, F16C 29/06

(54) **ARBEITSVORRICHTUNG MIT MINDESTENS EINER ANTRIEBSEINHEIT**
WORKING DEVICE HAVING AT LEAST ONE DRIVE UNIT
MACHINE DE TRAVAIL COMPORTANT AU MOINS UNE UNITÉ D'ENTRAÎNEMENT

(43) Veröffentlichungstag der Anmeldung: 09.05.2012
(73) Patentinhaber: FESTO AG & Co. KG, 73734 Esslingen (DE)
(72) Erfinder: BEIER, Martin, 72644 Oberboihingen (DE)
(74) Vertreter: Abel, Martin
(86) Internationale Anmeldenummer: PCT/EP2009/005176
(87) Internationale Veröffentlichungsnummer: WO 2011/006517

(56) Entgegenhaltungen:
- EP-A1- 1 614 503
- EP-A2- 0 418 875
- EP-A2- 1 240 974
- DE-U1- 20 012 299
- US-A- 5 678 928

## Beschreibung

Die Erfindung betrifft eine Arbeitsvorrichtung, mit mindestens einer ein bewegliches Ausgangsteil aufweisenden Antriebseinheit, die über ein Antriebsgehäuse verfügt, in dem zum Antreiben des Ausgangsteils dienende Antriebsmittel angeordnet sind, wobei die Arbeitsvorrichtung mindestens eine eine Längserstreckung aufweisende Führungsschiene enthält, an der die mindestens eine Antriebseinheit mittels zeine in sie integrierten Führungsschlittens linear verschiebbar gelagert ist, wobei das Antriebsgehäuse der Antriebseinheit unmittelbar einen die Führungsschiene reiterartig übergreifenden Schlittengrundkörper des Führungsschlittens bildet, der an einer von einer Längsachse des Antriebsgehäuses wegweisenden Seitenfläche eine sich quer zu der Längsachse erstreckende. Führungsnut aufweist, mit der voraus er an die Führungsschiene angesetzt ist.

Eine aus der DE-U-20 2009 004 685 bekannte Arbeitsvorrichtung enthält eine als Linearantrieb ausgebildete Antriebseinheit, deren Antriebsgehäuse einen mittels Fluidkraft zu einer Linearbewegung antreibbaren Antriebskolben enthält, mit dem ein von einer Kolbenstange gebildetes Ausgangsteil verbunden ist, mit dem ein insbesondere als Sauggreifer ausgebildetes Greifmittel bewegungsgekoppelt ist. Durch Betätigung des Ausgangsteils lässt sich das Greifmittel verlagern, um einen vorübergehend ergriffenen Gegenstand umzupositionieren. Die Arbeitsvorrichtung kann beispielsweise genutzt werden, um in der Elektronikfertigung Computerchips handzuhaben.

Die EP 0 868 965 B1 beschreibt eine Arbeitsvorrichtung, die mit einer Schlitten-Antriebsvorrichtung ausgestattet ist und für gleiche Zwecke verwendet werden kann.

Um ein mit dem Ausgangsteil bewegungsgekoppeltes Greifmittel mehrdimensional positionieren zu können, wäre es vorteilhaft, wenn die Antriebseinheit insgesamt an einer Führungsstruktur verschiebbar gelagert wäre. Die EP 1 892 423 A1 offenbart eine Führungsstruktur mit einem an zwei Längsholmen verschiebbar gelagerten Hubschlitten, der prinzipiell genutzt werden könnte, um daran eine Antriebseinheit zu befestigen. Allerdings hat diese bekannte Führungsstruktur einen sehr komplexen Aufbau, der relativ teuer in der Herstellung ist und dessen Nutzung eine Arbeitsvorrichtung mit relativ großen Dimensionen zur Folge hätte.

Die EP 1 240 974 A2 offenbart eine Werkzeugmaschine mit einem Aufbau der eingangs genannten Art, wobei eine Bearbeitungseinheit an einer Führungsschiene gelagert ist und hierbei die Führungsschiene von der Seite her reiterartig übergreift.

Es ist die Aufgabe der vorliegenden Erfindung, eine Arbeitsvorrichtung zu schaffen, die bei einfachem und kostengünstigem Aufbau und bei kompakten Abmessungen eine präzise Lagerung für mindestens eine verstellbare Antriebseinheit gewährleistet.

Zur Lösung dieser Aufgabe ist vorgesehen, dass das Antriebsgehäuse über einen sich in Achsrichtung seiner Längsachse an den Schlittengrundkörper anschließenden, die Antriebsmittel aufnehmenden und einstückig mit dem Schlittengrundkörper verbundenen Antriebsabschnitt verfügt, wobei der Schlittengrundkörper von mindestens einem für den Betrieb der Antriebseinheit genutzten Energieübertragungskanal durchsetzt ist, der die Führungsnut passiert und zu dem Antriebsabschnitt führt.

Somit ist die mindestens eine Antriebseinheit unter Vermittlung ihres als Antriebsgehäuse bezeichneten Gehäuses an einer Führungsschiene der Arbeitsvorrichtung linear verschiebbar gelagert. Ein wesentlicher Vorteil dabei ist, dass zu der Verschiebelagerung kein externer, zusätzlicher Führungsschlitten benötigt wird, weil der Führungsschlitten einen in die Antriebseinheit integrierten Bestandteil bildet. Der Führungsschlitten weist einen die Führungsschiene reiterartig übergreifenden Schlittengrundkörper auf, der unmittelbar vom Antriebsgehäuse der Antriebseinheit gebildet ist. Die Arbeitsvorrichtung verfügt somit über einen einfachen Aufbau mit wenigen Komponenten und garantiert eine hohe Führungspräzision für die verschiebbar gelagerte Antriebseinheit. Dies gilt auch dann, wenn an ein und derselben Führungsschiene gleichzeitig mehrere Antriebseinheiten mit dem gleichen Lagerungsprinzip relativ zu der Führungsschiene und auch relativ zueinander verschiebbar gelagert sind.

Das Antriebsgehäuse hat eine Längserstreckung und verfügt über einen sich in der Längsrichtung an den Schlittengrundkörper anschließenden, die Antriebsmittel aufnehmenden, als Antriebsabschnitt bezeichneten Gehäuseabschnitt, wobei der Schlittengrundkörper an einer Seitenfläche eine zur Aufnahme der Führungsschiene dienende Führungsnut aufweist. Der Schlittengrundkörper und der Antriebsabschnitt sind einstückig miteinander ausgebildet. Für den Betrieb der Antriebseinheit erforderliche Energie, beispielsweise Druckluft, Vakuum und/oder elektrische Energie, kann durch mindestens einen den Schlittengrundkörper durchsetzenden Energieübertragungskanal hindurchgeleitet werden kann. Dieser mindestens eine Energieübertragungskanal ist so angeordnet, dass er an der Führungsnut vorbeiläuft, insbesondere im Bereich deren Nutgrundes. Es können ohne weiteres mehrere solcher Energieübertragungskanäle gleichzeitig in dem Schlittengrundkörper ausgebildet sein, beispielsweise zwei Energieübertragungskanäle für eine doppeltwirkende fluidische Betätigung der Antriebsmittel und ein weiterer Energieübertragungskanal für eine Unterdruckbeaufschlagung eines mit dem Ausgangsteil bewegungsgekoppelten Sauggreifers. Für das eventuell gewünschte Hindurchleiten elektrischer Energie wird durch den entsprechenden Energieübertragungskanal zweckmäßigerweise mindestens ein elektrisches Kabel hindurchgeführt.

Vorteilhafte Weiterbildungen der Erfindung gehen aus den Unteransprüchen hervor.

Das Antriebsgehäuse der mindestens einen Antriebseinheit verfügt zweckmäßigerweise über einen einstückigen Gehäusegrundkörper, der sowohl den Schlittengrundkörper bildet als auch die Antriebsmittel aufnimmt. Auf diese Weise kann schon bei der Herstellung des Gehäusegrundkörpers mit hoher Präzision gewährleistet werden, dass der Schlittengrundkörper und die Antriebsmittel relativ zueinander eine gewünschte Ausrichtung aufweisen.

Der Schlittengrundkörper ist zweckmäßigerweise U-förmig ausgebildet und definiert eine von sich gegenüberliegenden Schenkelabschnitten flankierte Führungsnut, mit der voraus er an der Führungsschiene montierbar ist, so dass sich die Führungsschiene in Längsrichtung durch die Führungsnut hindurch erstreckt.

An den Schenkelabschnitten des Schlittengrundkörpers sind zweckmäßigerweise Lagerungsmittel angeordnet, die mit an den Längsseiten der Führungsschiene angeordneten Führungsflächen kooperieren. Diese Führungsflächen können insbesondere mindestens eine Führungsnut ausbilden, in die die zugeordneten Lagerungsmittel formschlüssig eingreifen. Eine besonders hohe Präzision ist realisierbar, wenn die Lagerungsmittel nach dem Prinzip sogenannter Kugelumlaufführungen ausgebildet sind.

Eine besonders einfache Montage der Antriebseinheit an der Führungsschiene ist möglich, wenn die Führungsschiene in einem Montageabschnitt im Bereich ihrer beiden Längsseiten je eine Montageaussparung aufweist, wobei die Montageaussparungen in der Längsrichtung der Führungsschiene auf gleicher Höhe liegen, so dass die Antriebseinheit mit ihrem den Führungsschlitten bildenden Abschnitt problemlos von der Seite her aufgesetzt werden kann. Mit umgekehrtem Bewegungsablauf kann die Antriebseinheit an dem Montageabschnitt bei Bedarf auch wieder von der Führungsschiene abgenommen werden.

Zweckmäßigerweise sind im Bereich einer dem Antriebsabschnitt entgegengesetzten Rückseite des Schlittengrundkörpers Anschlussmittel vorhanden, die das Anschließen mindestens einer wegführenden Energieführungsleitung an den mindestens einen Energieübertragungskanal ermöglichen. Die Energieführungsleitung ist beispielsweise mindestens ein elektrisches Kabel oder mindestens ein flexibler Fluidschlauch.

Die mindestens eine Antriebseinheit ist insbesondere mittels Fluidkraft betätigbar ausgebildet. Hierbei können die Antriebsmittel einen mit dem Ausgangsteil antriebsmäßig gekoppelten Antriebskolben aufweisen, der sich in einem in dem Antriebsgehäuse ausgebildeten Antriebsraum befindet. Allerdings wäre prinzipiell auch eine auf einer anderen Antriebstechnologie basierende Antriebseinheit denkbar, beispielsweise eine elektrisch aktivierbare Antriebseinheit oder eine kombiniert elektrisch und durch Fluidkraft betätigbare Antriebseinheit.

Besonders vorteilhaft ist eine Realisierung der Antriebseinheit als Linearantriebseinheit, bei der die hervorrufbare Arbeitsbewegung des Ausgangsteils eine Linearbewegung ist. Eine andere mögliche Bauform wäre diejenige einer Drehantriebseinheit.

Mit dem Ausgangsteil kann jeder beliebige Endeffektor bewegungsgekoppelt sein, in Abhängigkeit von der durchzuführenden Arbeit. Ist die Arbeitsvorrichtung als Schweißvorrichtung genutzt, kann als Endeffektor eine Schweißelektrode vorhanden sein. Bei einer Ausgestaltung als Handhabungsvorrichtung ist der mindestens eine Endeffektor insbesondere ein Greifmittel, beispielsweise ein Backengreifer oder vorzugsweise ein mittels Unterdruck aktivierbarer Sauggreifer.

Eine besonders vorteilhafte Weiterbildung der Arbeitsvorrichtung sieht vor, dass die Führungsschiene unmittelbar von einem einstückigen Tragholm gebildet ist, der sich frei und ohne zusätzliche Stützstruktur zwischen zwei in seiner Längsrichtung zueinander beabstandeten Befestigungsschnittstellen erstreckt. Die Befestigungsschnittstellen ermöglichen eine Fixierung des Tragholmes beziehungsweise der Führungsschiene an je einer Haltestruktur, so dass sich die Führungsschiene portalartig zwischen den beiden Haltestrukturen erstrecken kann. Eine solche Bauform hat Vorteile gegenüber einer Bauweise, bei der die Führungsschiene längsseits an einer zusätzlichen Stützstruktur angebracht ist, da aufwendige Ausrichtmaßnahmen vermieden werden. Auch die Montage ist sehr einfach.

Die beiden Haltestrukturen sind zweckmäßigerweise Bestandteile der Arbeitsvorrichtung und können ihrerseits jeweils an einer Lagereinrichtung der Arbeitsvorrichtung in zur Längsachse der Führungsschiene rechtwinkeliger Richtung bewegbar gelagert sein. Auf diese Weise besteht insgesamt die Möglichkeit, die mindestens eine Antriebseinheit in der Längsrichtung der Führungsschiene zu bewegen und außerdem rechtwinkelig dazu, durch entsprechende Parallelverlagerung der Führungsschiene.

Nachfolgend wird die Erfindung anhand der beiliegenden Zeichnung näher erläutert. In dieser zeigen:
- Figur 1: eine bevorzugte erste Ausführungsform der erfindungsgemäßen Arbeitsvorrichtung in einer Vorderansicht, wobei Haltestrukturen der Arbeitsvorrichtung nur strichpunktiert angedeutet sind,

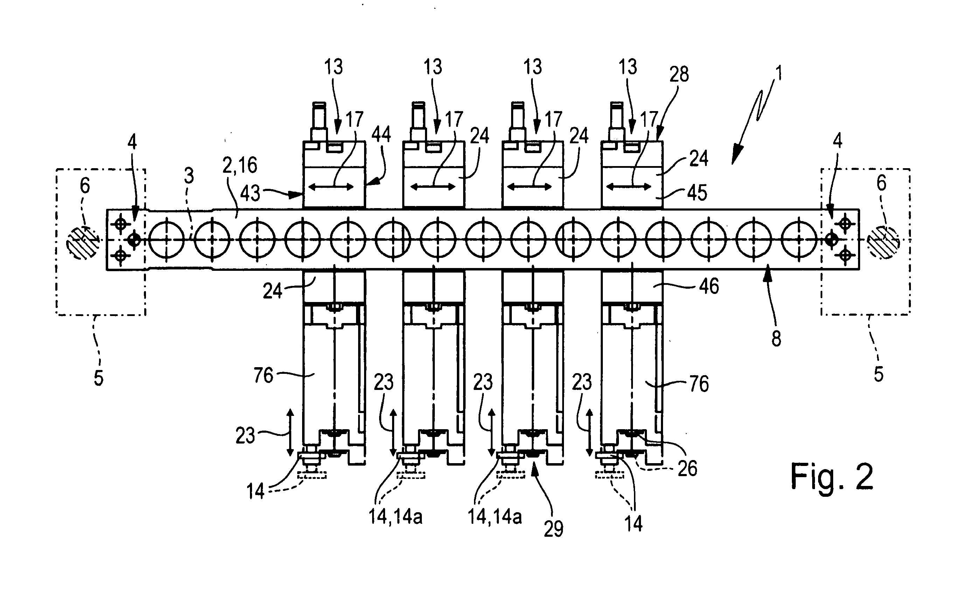

- Figur 2: die Arbeitsvorrichtung aus Figur 1 in einer Rückansicht,
- Figur 3: die Arbeitsvorrichtung aus Figuren 1 und 2 in einer Draufsicht mit Blickrichtung gemäß Pfeil III aus Figur 1,
- Figur 4: die Arbeitsvorrichtung aus Figuren 1 bis 3 in einer Schrägansicht, ohne Darstellung der Haltestrukturen,
- Figur 5: eine Seitenansicht der Arbeitsvorrichtung mit Blickrichtung gemäß Pfeil V aus Figur 4, wobei die Blickrichtung mit der Achsrichtung der Längsachse der Führungsschiene zusammenfällt,
- Figur 6: einen Querschnitt durch die Arbeitsvorrichtung gemäß Schnittlinie VI-VI aus Figur 5, wobei die Schnittebene eine Antriebseinheit längs durchschneidet,
- Figur 7: eine Seitenansicht einer Antriebseinheit mit Blickrichtung gemäß Pfeil VII aus Figur 6, teilweise aufgebrochen,
- Figur 8: den in Figur 6 umrahmten Ausschnitt VIII in einer vergrößerten Darstellung,
- Figur 9: eine perspektivische Einzeldarstellung einer Antriebseinheit und
- Figur 10: die Antriebseinheit aus Figur 9 aus einem anderen Blickwinkel, wobei die Lagerungsmittel der Antriebseinheit zusätzlich separat abgebildet sind, um die Art ihres Aufbaus und Einbaus zu verdeutlichen.

Die insgesamt mit Bezugsziffer 1 bezeichnete Arbeitsvorrichtung enthält mindestens einen eine lineare Erstreckung aufweisenden und insbesondere schienenförmig ausgebildeten Tragholm 2, der in der üblichen Gebrauchsorientierung der Arbeitsvorrichtung 1 horizontal ausgerichtet ist. Seine Längsachse ist strichpunktiert bei 3 angedeutet. Der Tragholm 2 ist bevorzugt ein einstückiges Bauteil und besteht zweckmäßigerweise aus Metall, insbesondere aus Stahl.

An dem Tragholm 2 sind, in der Längsrichtung des Tragholmes 2 beabstandet, zwei Befestigungsschnittstellen 4 ausgebildet. Sie befinden sich zweckmäßigerweise an den beiden Endbereichen des Tragholmes 2. Mit jeder Befestigungsschnittstelle 4 ist der Tragholm 2 an einer strichpunktiert angedeuteten Haltestruktur 5 lösbar oder unlösbar befestigt. Die Befestigungsschnittstellen 4 enthalten zweckmäßigerweise ein oder mehrere Löcher, die den Durchgriff von Schrauben und/oder Verbindungsstiften ermöglichen, um eine Schraubbefestigung und/oder Verstiftung bezüglich der zugeordneten Haltestruktur 5 vorzunehmen. Andere Befestigungsmaßnahmen sind alternativ oder zusätzlich ebenfalls möglich.

Unter Vermittlung der Haltestrukturen 5 stützt sich der Tragholm 2 an einem nicht weiter abgebildeten Maschinengestell ab. Hierbei ist prinzipiell eine direkte Abstützung möglich. Beim Ausführungsbeispiel hingegen erfolgt eine indirekte Abstützung unter Zwischenschaltung von je einer ebenfalls nur strichpunktiert angedeuteten Lagereinrichtung 6, an der die jeweils zugeordnete Haltestruktur 5 gemäß Doppelpfeil 7 in einer zu der Längsachse 3 rechtwinkeligen Richtung verstellbar und insbesondere verschiebbar geführt ist. Die Lagereinrichtung 6 kann beispielsweise eine Führungsschiene oder eine Führungsstange sein, die an einem Maschinengestell befestigt ist.

Da die von den Lagereinrichtungen 6 definierten möglichen Bewegungsrichtungen 7 parallel zueinander verlaufen, bildet der Tragholm 2 zusammen mit den Haltestrukturen 5 eine Trageinheit 8, die insgesamt eine durch einen Doppelpfeil angedeutete erste Positionierbewegung 12 rechtwinkelig zu der Längsachse 3 ausführen kann. Zweckmäßigerweise vorhandene Antriebsmittel, die die erste Positionierbewegung 12 hervorrufen können, sind in der Zeichnung nicht weiter abgebildet.

Der Tragholm 2 erstreckt sich ohne jegliche Querabstützung frei tragend zwischen den beiden Haltestrukturen 5. Auf diese Weise ergibt sich insbesondere eine portalartige Anordnung.

Der einstückige Tragholm 2, der zur Gewichtsersparnis mehrfach gelocht sein kann, trägt eine Mehrzahl von mittels Fluidkraft betätigbaren Antriebseinheiten 13. Vorzugsweise sind die Antriebseinheiten 13 pneumatisch betätigt. Hiervon abweichend wäre es jedoch prinzipiell auch denkbar, mindestens eine der Antriebseinheiten 13 elektrisch betätigbar auszubilden oder in Form einer Hybrid-Antriebseinheit mit elektro-fluidischem Antriebsprinzip.

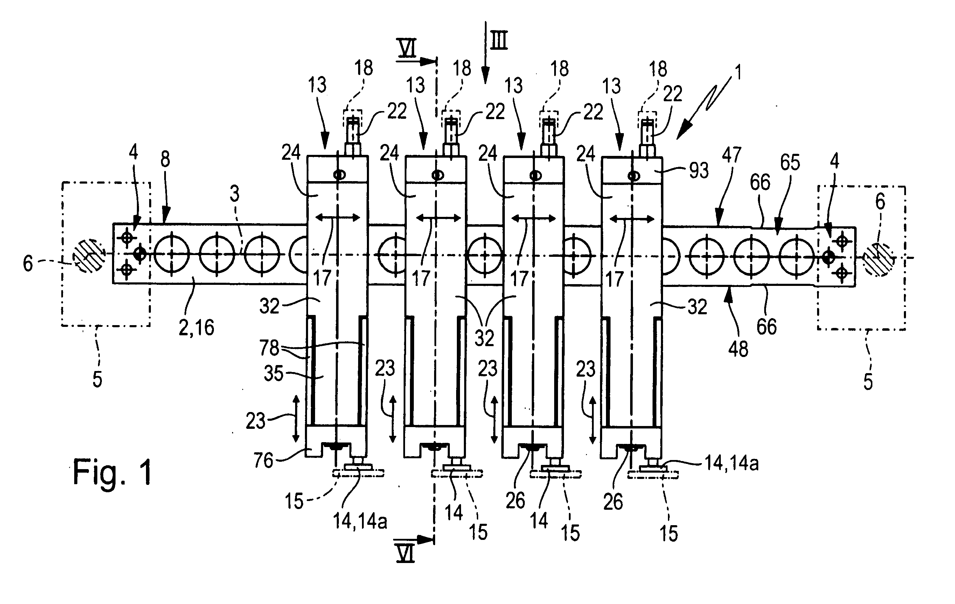

Die Antriebseinheiten 13 hängen an dem Tragholm 2 und weisen jeweils mindestens einen Endeffektor 14 auf, mit dem in einem unterhalb des Tragholmes 2 angeordneten Arbeitsbereich vorrichtungsspezifische Arbeiten verrichtet werden können. Exemplarisch sind die Endeffektoren 14 als Greifmittel 14a ausgebildet, die es ermöglichen, lediglich in Figur 1 angedeutete Gegenstände 15 innerhalb des Arbeitsbereiches zu erfassen und umzusetzen. Die Arbeitsvorrichtung 1 des Ausführungsbeispiels ist also eine Handhabungsvorrichtung.

Die Arbeitseinheiten 13 schweben über dem Untergrund und werden lediglich von dem Tragholm 2 gehalten. Der Tragholm 2 hat dabei eine vorteilhafte Zusatzfunktion, indem er unmittelbar eine Führungsschiene 16 bildet, an der die Antriebseinheiten 13 in Achsrichtung der Längsachse 3 verschiebbar gelagert sind. Jede Antriebseinheit 13 kann also eine zu der Längsachse 3 achsparallele, durch einen Doppelpfeil angedeutete zweite Positionierbewegung 17 ausführen. Dabei sind die Antriebseinheiten 13 zweckmäßigerweise unabhängig voneinander relativ zueinander bewegbar.

Die zweiten Positionierbewegungen 17 können durch je eine in Figur 1 strichpunktiert angedeutete Betätigungseinheit 18 hervorgerufen werden, die auf einen beispielsweise zapfenartig ausgebildeten Mitnehmer 22 der betreffenden Antriebseinheit 13 einwirkt.

Die Arbeitsvorrichtung 1 kann mehrere mit Abstand parallel nebeneinander angeordnete und jeweils mehrere Antriebseinheiten 13 tragende Tragholme 12 aufweisen, die unabhängig voneinander die erste Positionierbewegung 12 ausführen können. Es besteht dann die Möglichkeit, an unterschiedlichen Tragholmen 2 gelagerte Antriebseinheiten 13 mittels je einer Betätigungseinheit 18 antriebsmäßig zu koppeln, so dass sie stets nur gemeinsam ihre zweite Positionierbewegung 17 ausführen können.

Eine derart ausgebildete Arbeitsvorrichtung kann beispielsweise dazu genutzt werden, um durch die Antriebseinheiten 13 in dem erwähnten Arbeitsbereich nahe beieinanderliegende Gegenstände 15 aufzunehmen und nach einer anschließenden Durchführung der ersten und zweiten Positionierbewegungen 12, 17 mit größerem Abstand zueinander wieder abzulegen. Ein solcher Anwendungsfall findet sich beispielsweise im Zusammenhang mit der Fertigung elektronischer Komponenten, wobei es sich bei den Gegenständen 15 um Computerchips handeln kann.

Unabhängig vom Ausführungsbeispiel kann an der den Tragholm 2 bildenden mindestens einen einstückigen Führungsschiene 16 auch nur eine einzige Antriebseinheit 13 angeordnet sein.

Durch die erste und zweite Positionierbewegung 12, 17 kann jede Antriebseinheit 13 in einer beim Ausführungsbeispiel horizontal ausgerichteten Ebene verfahren werden. Diese Verfahrmöglichkeit gilt dann entsprechend für den an der Antriebseinheit 13 angeordneten Endeffektor 14. Allerdings kann der Endeffektor 14 zusätzlich auch noch eine zu den beiden vorgenannten Positionierbewegungen 12, 17 rechtwinkelige dritte Positionierbewegung 23 ausführen, die unmittelbar durch die zugeordnete Antriebseinheit 13 hervorrufbar ist.

Genauer gesagt verfügt jede Antriebseinheit 13 über ein zur besseren Unterscheidung als Antriebsgehäuse 24 bezeichnetes Gehäuse, über das sie sich an der Führungsschiene 16 abstützt, und außerdem über mindestens ein relativ zu dem Antriebsgehäuse 23 zu einer Arbeitsbewegung 25 antreibbares Ausgangsteil 26, mit dem der Endeffektor 14 zum Hervorrufen der dritten Positionierbewegung 23 bewegungsgekoppelt ist. Die Arbeitsbewegung 25 ist beim Ausführungsbeispiel mit der dritten Positionierbewegung 23 gleichgerichtet, wobei die beiden Bewegungen simultan ablaufen. Bedingt dadurch, dass die Antriebseinheiten 13 beim Ausführungsbeispiel als Linearantriebseinheiten ausgebildet sind, handelt es sich bei der dritten Positionierbewegung 23 und der Arbeitsbewegung 25 um je eine Linearbewegung.

Durch Ausführen der dritten Positionierbewegung 23 kann mittels des Endeffektors 14 ein Gegenstand 15 aufgenommen und abgelegt werden. Durch die erste und zweite Positionierbewegung 12, 17 kann der Gegenstand zwischen dem Aufnehmen und dem Ablegen eine Ortsveränderung erfahren.

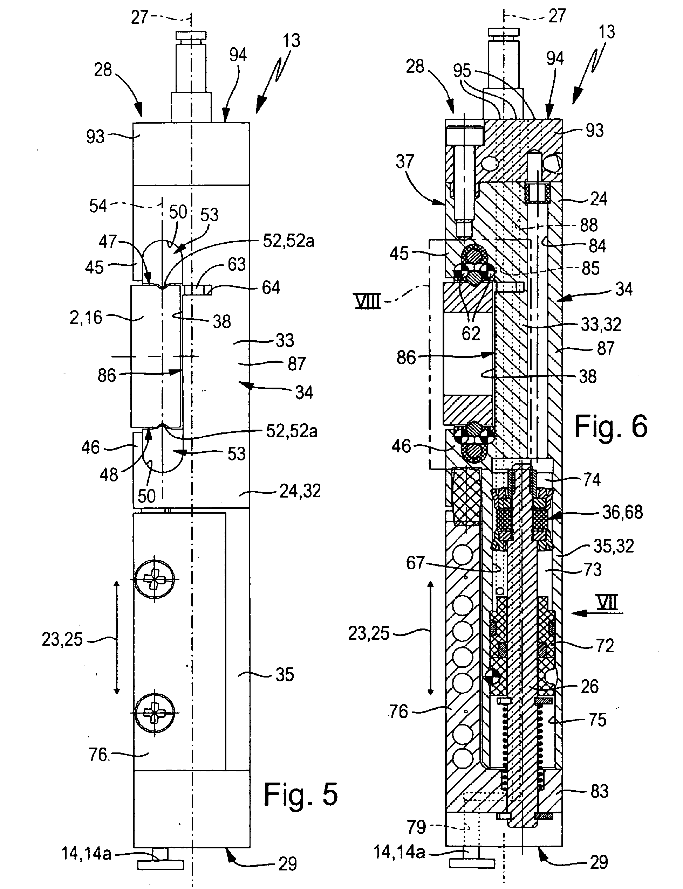

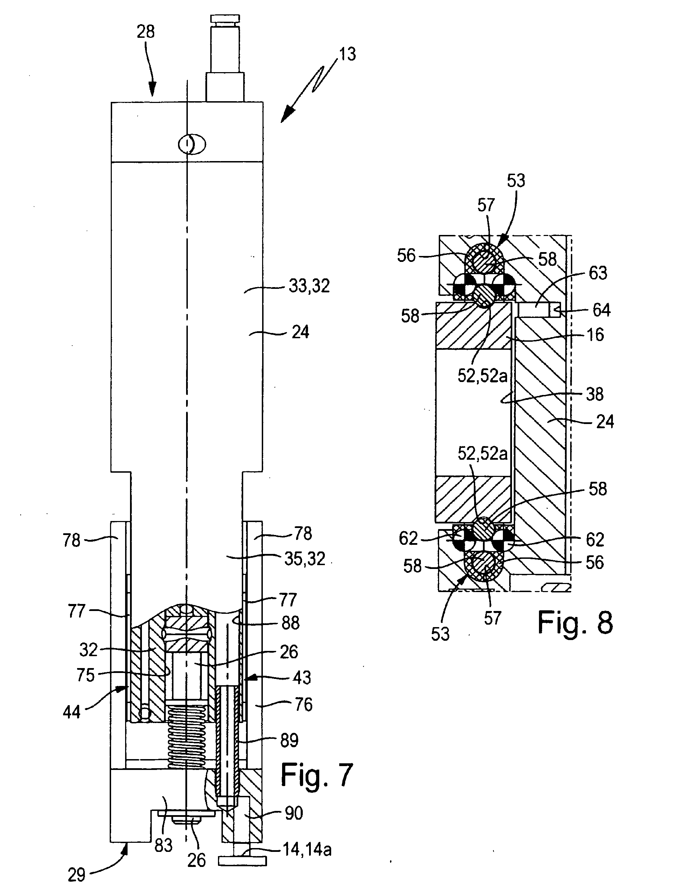

Wie insbesondere auch den Figuren 5 bis 10 zu entnehmen ist, verfügt jede Antriebseinheit 13 und insbesondere auch deren Antriebsgehäuse 24 über eine Längserstreckung mit einer zur Richtung der Arbeitsbewegung 25 parallelen Längsachse 27. Die Antriebseinheit 13 verfügt über eine in dem beispielhaften Anwendungsfall nach oben weisende Rückseite 28 und über eine nach unten weisende entgegengesetzte Vorderseite 29. Der Endeffektor 14 ist zweckmäßigerweise an der Vorderseite 29 platziert.

Das Antriebsgehäuse 24 enthält unter anderem einen sich in Achsrichtung der Längsachse 27 erstreckenden Gehäusegrundkörper 32, der aus einem einzigen Materialstück besteht. Ein Abschnitt dieses einstückigen Gehäusegrundkörpers 32 bildet den Schlittengrundkörper 33 eines in die Antriebseinheit 13 integrierten Führungsschlittens 34, über den die Antriebseinheit 13 an der bevorzugt ebenfalls einstückigen Führungsschiene 16 zur Ausführung der zweiten Positionierbewegung 17 verschiebbar gelagert ist. Darüber hinaus bildet ein als Antriebsabschnitt 35 bezeichneter weiterer Abschnitt des einstückigen Gehäusegrundkörpers 32 ein Aufnahmemittel für im Innern des Antriebsgehäuses 24 untergebrachte Antriebsmittel 36, die ausgebildet sind, um die Arbeitsbewegung 25 des Ausgangsteils 26 hervorzurufen. Der Antriebsabschnitt 35 schließt sich in Achsrichtung der Längsachse 27 insbesondere unmittelbar an den Schlittengrundkörper 33 an.

An einer rechtwinkelig zu der Längsachse 27 orientierten ersten Seitenfläche 37 des Antriebsgehäuses 24 weist der Schlittengrundkörper eine sich linear erstreckende Führungsnut 38 auf. Die Längsachse 42 der Führungsnut 38 erstreckt sich rechtwinkelig zur Längsachse 27 des Antriebsgehäuses 24, so dass die Führungsnut 38 zu einander entgegengesetzten, in Richtung der zweiten Positionierbewegung 17 orientierten zweiten und dritten Seitenflächen 43, 44 des Antriebsgehäuses 24 ausmündet.

Die Antriebseinheit 13 ist mit der an der ersten Seitenfläche 37 angeordneten längsseitigen Öffnung der Führungsnut 38 voraus an die Führungsschiene 16 angesetzt, so dass die Führungsschiene 16 von dem Schlittengrundkörper 33 reiterartig übergriffen wird. Der Querschnitt der Führungsschiene 16 kommt dabei zweckmä-βigerweise zumindest zum größten Teil innerhalb der Führungsnut 38 zu liegen.

Bedingt durch die Führungsnut 38 verfügt der Schlittengrundkörper 33 über eine im Wesentlichen U-förmige Gestalt. Die U-Struktur umgrenzt dabei die Führungsnut 38. Sich in Achsrichtung der Längsachse 27 gegenüberliegende erste und zweite Schenkelabschnitte 45, 46 des Schlittengrundkörpers 33 flankieren die Führungsnut 38 längsseits und liegen jeweils einer von zwei einander entgegengesetzten Längsseiten 47, 48 der Führungsschiene 16 gegenüber.

An diesen beiden sich parallel zur Längsachse 3 erstreckenden Längsseiten 47, 48 ist die Führungsschiene 16 mit je einer sich in Achsrichtung der Längsachse 3 erstreckenden Führungsfläche 52 versehen, die beim Ausführungsbeispiel eine Führungsnut 52a bildet. Die beiden Schenkelabschnitte 45, 46 sind an den einander zugewandten Innenseiten jeweils mit Lagerungsmitteln 53 versehen, die jeweils einer der Führungsflächen 52 gegenüberliegen und sich daran je nach Ausgestaltung entweder gleitverschieblich oder abrollfähig abstützen. Beim Ausführungsbeispiel stehen die Lagerungsmittel 53 jeweils ein Stückweit über die Innenfläche des zugeordneten Schenkelabschnittes 35, 36 vor und greifen in die gegenüberliegende Führungsnut 52a formschlüssig ein.

Dieser Eingriff der Lagerungsmittel 53 in die Führungsnuten 52a hat unter anderem den Effekt, dass die Antriebseinheit 13 mit der Führungsschiene 16 in einem Verriegelungseingriff steht, der die beiden Komponenten rechtwinkelig zu einer durch die beiden Führungsnuten 52a definierten Führungsebene 54 unverrückbar zusammenhält. Da die Führungsnuten 52a zueinander beabstandet sind, sind die beiden Komponenten 13, 16 zudem unverkippbar gegenseitig fixiert.

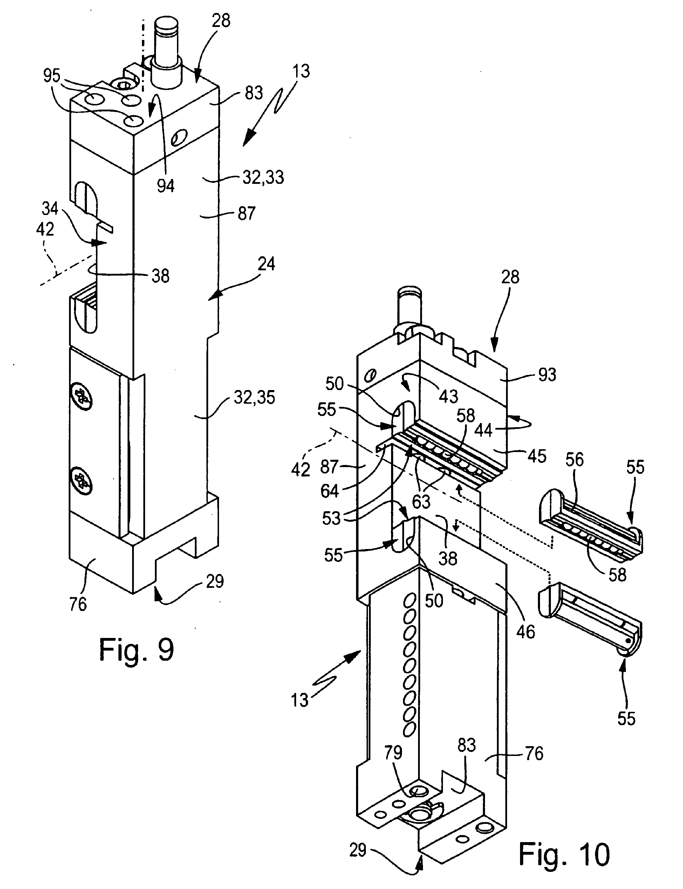

Beim Ausführungsbeispiel sind die Lagerungsmittel 53 als Wälzlagermittel konzipiert. Sie bestehen insbesondere aus jeweils einer aus Figur 10 gut ersichtlichen Lagerungskassette 55, die in eine an der Innenfläche des jeweils zugeordneten Schenkelabschnittes 45, 46 ausgebildete nutartige Aufnahmevertiefung 50 eingesetzt sind. Jede Lagerungskassette 55 weist ein vorzugsweise aus zwei Gehäusehälften bestehendes Lagergehäuse 56 auf sowie mehrere im Innern des Lagergehäuses 56 in einem Umlaufkanal 57 bewegbar geführte Wälzlagerkörper 58. Die jeweils der Führungsschiene 16 zugewandten Wälzlagerkörper 58 stützen sich an zwei im Lagergehäuse 56 aufgenommenen Lagerstäben 62 ab und ragen mit einem in die benachbarte Führungsnut 52a eingreifenden Umfangsabschnitt aus dem Lagergehäuse 56 heraus.

Wenn eine Antriebseinheit 13 die zweite Positionierbewegung 17 ausführt, wandern die Wälzlagerkörper 58 entlang des Umlaufkanals 57, wobei die der Führungsschiene 16 zugewandten Wälzlagerkörper 58 an den Flanken der Führungsnuten 52a sowie an den Lagerstäben 62 abrollen.

Abweichend vom Ausführungsbeispiel wäre es prinzipiell auch möglich, die Lagermittel 53 als Gleitlagermittel auszubilden, wobei die Möglichkeit bestünde, die Gleitlagermittel als einstückige Bestandteile des Schlittengrundkörpers 33 auszubilden.

Das Lagerspiel lässt sich mittels wenigstens einer Spannschraube 63 sehr einfach einstellen. Die Vorspannung der Spannschrauben 63 bestimmt die zwischen den beiden Schenkelabschnitten 45, 46 gemessene Nutbreite der Führungsnut 38. Damit die hierzu erforderliche Verformungselastizität gegeben ist, weist der Schlittengrundkörper 33 beim Ausführungsbeispiel mindestens einen zu der Führungsnut 38 ausmündenden Längsschlitz 64 auf, der von der mindestens einen Spannschraube 63 durchquert ist.

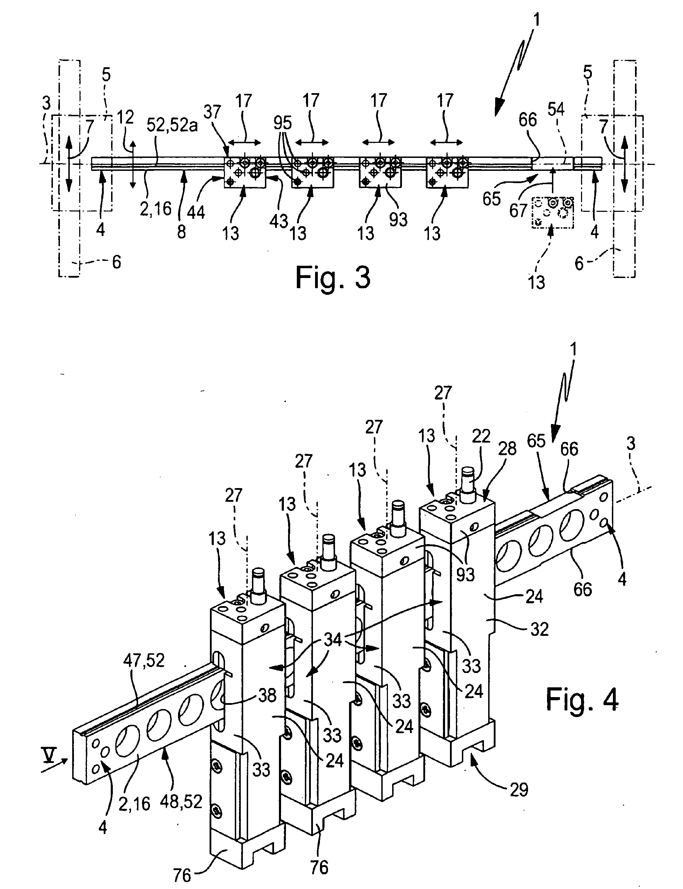

Die Antriebseinheiten 13 könnten prinzipiell dadurch montiert und demontiert werden, dass sie von einer Stirnseite her auf die Führungsschiene 16 aufgeschoben werden. Dies würde jedoch eine vorübergehende Demontage der Führungsschiene 16 von den Haltestrukturen 15 erfordern. Beim Ausführungsbeispiel ist die Führungsschiene 16 daher in einem als Montageabschnitt 65 bezeichneten Längenabschnitt an beiden einander entgegengesetzten, die Führungsflächen 52 aufweisenden Längsseiten 47, 48 mit jeweils einer Montageaussparung 66 versehen. Diese beiden Montageaussparungen 66 liegen in Achsrichtung der Längsachse 3 auf gleicher Höhe und bewirken eine lokale Verringerung der in der Führungsebene 54 gemessenen Schienenbreite. Diese Schienenbreite ist etwas geringer als der lichte Abstand zwischen den Lagerungsmitteln 53, so dass die Antriebseinheit 13 zu ihrer Montage an der Führungsschiene 16 problemlos mit ihrem Führungsschlitten 34 in zu der Führungsebene 54 rechtwinkeliger Richtung an die Führungsschiene 16 angesetzt werden kann. Diese Ansetzbewegung ist in Figur 3 bei 67 durch einen Pfeil illustriert.

Auf diese Weise einmal angesetzt, ist die Antriebseinheit 13 nur noch in Achsrichtung der Längsachse 3 zu verschieben, so dass ihre Lagerungsmittel 53 mit den sich an den Montageabschnitten 65 anschließenden Führungsflächen 52 in Eingriff gelangen.

Die Demontage der Antriebseinheiten 13 kann mit umgekehrter Bewegungsabfolge durchgeführt werden.

Es versteht sich, dass der Montageabschnitt 65 zweckmäßigerweise an einem Endbereich der Führungsschiene 16 angeordnet ist. Abweichend vom Ausführungsbeispiel kann die Führungsschiene 16 auch mehrere in ihrer Längsrichtung mit Abstand zueinander angeordnete Montageabschnitte 65 aufweisen. Die in Achsrichtung der Längsachse 3 gemessene Länge des Montageabschnittes 65 entspricht zweckmäßigerweise mindestens der in Längsrichtung der Führungsnut 38 gemessenen Breite des Führungsschlittens 34 im Bereich der Führungsnut 38.

Die Antriebsmittel 36 enthalten beim Ausführungsbeispiel einen sich in dem Antriebsabschnitt 35 in Achsrichtung der Längsachse 27 erstreckenden, bevorzugt zylindrisch konturierten Antriebsraum 67 sowie einen in diesem Antriebsraum 67 unter Abdichtung gleitverschieblich aufgenommenen Antriebskolben 68. An dem Antriebskolben 68 ist das bevorzugt stangenförmige Ausgangsteil 26 befestigt, das an der beim Ausführungsbeispiel nach unten weisenden Vorderseite 29 aus dem Antriebsgehäuse 24 herausragt. Hierbei durchsetzt das Ausgangsteil 26 unter Abdichtung und gleitverschieblich einen den Antriebsraum 67 an der Vorderseite verschließenden und an dem Gehäusegrundkörper 32 befestigten Abschlussdeckel 72.

Der Antriebskolben 68 unterteilt den Antriebsraum 67 in eine vordere Arbeitskammer 73 und eine hintere Arbeitskammer 74. Die vordere Arbeitskammer 73 liegt zwischen dem Antriebskolben 68 und dem Abschlussdeckel 72, während die hintere Arbeitskammer 74 zwischen dem Antriebskolben 68 und dem Schlittenkörper 33 liegt, da der Schlittenkörper 33 unmittelbar die rückseitige Abschlusswand des Antriebsraumes 67 bildet.

Der Antriebsraum 67 insgesamt ist Bestandteil einer zur Vorderseite des Gehäusegrundkörpers 32 hin ausmündenden zylindrischen Ausnehmung 75, in die der Abschlussdeckel 72 nach Art eines Stopfens eingesetzt ist.

Das stangenförmige Ausgangsteil 26 ragt an der Vorderseite stirnseitig aus dem Antriebsgehäuse 24 heraus und ist dort an einer Schlitteneinheit 76 befestigt, die an dem Antriebsabschnitt 35 des Antriebsgehäuses 24 in Achsrichtung der Längsachse 27 verschiebbar gelagert ist. Hierzu dienende weitere Lagerungsmittel 77, die insbesondere als Wälzlagermittel ausgebildet sind, sind zwischen der zweiten und dritten Seitenfläche 43, 44 des Antriebsabschnittes 35 und je einem von zwei Schlittenschenkeln 78 der einen U-förmigen Querschnitt aufweisenden und den Antriebsabschnitt 35 reiterartig übergreifenden Schlitteneinheit 76 angeordnet.

An der im Ausführungsbeispiel nach unten weisenden Vorderseite der Schlitteneinheit 76 befinden sich Befestigungsmittel 79, an denen der nicht in allen Abbildungen gezeigte Endeffektor 14 befestigt ist.

Die Befestigungsmittel 79 befinden sich vorzugsweise an einer Stirnwand 83 der Schlitteneinheit 76, die der vom Schlittengrundkörper 33 abgewandten Vorderseite des Antriebsabschnittes 35 vorgelagert ist. An der Stirnwand 83 greift auch das Ausgangsteil 26 an, um die Antriebskraft auf die Schlitteneinheit 76 und folglich den Endeffektor 14 zum Zwecke der Ausführung der dritten Positionierbewegung 23 zu übertragen.

Eventuelle Querkräfte, die durch einen Gegenstand 15 auf den Endeffektor einwirken, werden durch die Schlitteneinheit 76 über die weiteren Lagerungsmittel 77 in das Antriebsgehäuse 24 und insbesondere dessen Antriebsabschnitt 35 eingeleitet und vom Ausgangsteil 26 ferngehalten, sodass der Verschleiß des Ausgangsteils 26 sowie der Verschleiß der Antriebsmittel 36 minimiert ist. Die geführte Schlitteneinheit 76 sorgt außerdem für eine sehr hohe Präzision der dritten Positionierbewegung 23.

Die Arbeitsbewegung 25 des Ausgangsteils 26 wird durch gesteuerte Fluidbeauf schlagung der vorderen und hinteren Arbeitskammer 73, 74 hervorgerufen. Zu diesem Zweck mündet in die hintere Arbeitskammer 74 ein erster Energieübertragungskanal 84 und in die vordere Arbeitskammer 73 ein zweiter Energieübertragungskanal 85. Durch diese Energieübertragungskanäle 84, 85 hindurch kann ein Antriebsfluid, insbesondere Druckluft, nach Wahl zugeführt oder abgeführt werden. Beiden Energieübertragungskanälen 84, 85 ist gemeinsam, dass sie den Schlittengrundkörper 33 in zu der Längsachse 27 bevorzugt paralleler Richtung durchsetzen und dabei die Führungsnut 38 passieren.

Der Schlittengrundkörper hat einen den Nutgrund 86 der Führungsnut 38 definierenden Rückenabschnitt 87, von dem die beiden Schenkelabschnitte 45, 46 wegragen. Die beiden Energieübertragungskanäle 84, 85 verlaufen zweckmäßigerweise innerhalb dieses Rückenabschnittes, so dass sie den Schlittengrundkörper 33 geradlinig und ohne Abstufung durchsetzen können.

Die Antriebseinheit 13 enthält beim Ausführungsbeispiel zusätzlich noch einen weiteren, dritten Energieübertragungskanal 88, der auch den Schlittengrundkörper 33 in Längsrichtung durchsetzt, wobei sein innerhalb des Schlittengrundkörpers 33 verlaufender Längenabschnitt zweckmäßigerweise parallel zu den dort ebenfalls verlaufenden Längenabschnitten des ersten und zweiten Energieübertragungskanals 84, 85 verläuft. Auch der dritte Energieübertragungskanal 88 erstreckt sich zweckmäßigerweise innerhalb des Rückenabschnittes 87.

Der dritte Energieübertragungskanal 88 dient zur Betätigung des beim Ausführungsbeispiel als Sauggreifer ausgebildeten Endeffektors 14. Hierzu kann dem Sauggreifer durch den dritten Energieübertragungskanal 88 bedarfsweise ein Unterdruck auferlegt werden, um einen handzuhabenden Gegenstand 15 anzusaugen.

Bedingt dadurch, dass der den Endeffektor 14 bildende Sauggreifer an der bezüglich des Antriebsgehäuses 24 beweglichen Schlitteneinheit 76 angeordnet ist, wird beim Ausführungsbeispiel eine variable Verbindung zwischen dem dritten Energieübertragungskanal 88 und dem Endeffektor 14 durch ein Rohrstück 89 hergestellt, das axial teleskopierbar in den zur vorderen Stirnfläche des Antriebsabschnittes 35 ausmündenden dritten Energieübertragungskanal 88 eintaucht, und das andererseits an der Schlitteneinheit 76 befestigt ist, wo es über einen Verbindungskanal 90 mit dem Endeffektor 14 in Fluidverbindung steht. Wenn die Schlitteneinheit 76 die dritte Positionierbewegung 23 ausführt, verändert sich folglich die Eintauchtiefe des Rohrstückes 89 bezüglich des dritten Energieübertragungskanals 88, ohne dessen Fluidverbindung zum Endeffektor 14 zu unterbrechen.

Beim Ausführungsbeispiel sind somit alle Energieübertragungskanäle 84, 85, 88 als Fluidkanäle ausgebildet. Hiervon abweichend könnte aber auch mindestens ein Energieübertragungskanal vorhanden sein, der zur Übertragung elektrischer Energie genutzt wird, beispielsweise für Antriebs- und/oder Diagnosemaßnahmen, wobei dann die Energieübertragung insbesondere mittels mindestens eines elektrischen Kabels erfolgt, das durch den Energieübertragungskanal hindurchgeführt ist.

An die dem Antriebsabschnitt 35 entgegengesetzte Rückseite des Gehäusegrundkörpers 32 ist zweckmäßigerweise ein Anschlussblock 93 angesetzt, der auch von den drei Energieübertragungskanälen 84, 85, 88 durchsetzt ist, wobei Letztere an einer Außenfläche des Anschlussblockes 93, insbesondere an dessen rückseitiger Stirnfläche 94, mit als Anschlussmittel 95 fungierenden Anschlussöffnungen ausmünden. An diese Anschlussmittel 95 kann jeweils eine in der Zeichnung nicht weiter abgebildete externe Energieführungsleitung angeschlossen werden, um eine Verbindung mit einer externen Steuereinrichtung zu ermöglichen, die die Fluidbeaufschlagung der Energieübertragungskanäle 84, 85, 88 steuert. Eine solche Steuereinrichtung enthält insbesondere auch mindestens eine Ventilanordnung.

Die Anschlussöffnungen könnten Gewinde aufweise, um eine Energieführungsleitung lösbar einschrauben zu können. Im Übrigen können die Anschlussmittel von beliebiger Bauart sein, beispielsweise auch in in Form von Steckanschlussvorrichtungen.

Der separate Anschlussblock 93 könnte auch entfallen und die Anschlussmittel 95 dann direkt an dem Gehäusegrundkörper 32 angeordnet sein.

Durch die Integration des Führungsschlittens 34 in die Antriebseinheit 13 kann die Führungsgenauigkeit erhöht und die zu bewegende Masse erheblich verringert werden. Der Schlittengrundkörper 33 des Führungsschlittens 34 ist ein einstückiger Bestandteil des Antriebsgehäuses 24, so dass keine Justiermaßnahmen zwischen dem Antriebsgehäuse 24 und dem Führungsschlitten 34 erforderlich sind. Für geringe Abmessungen und geringes Gewicht sorgt beim Ausführungsbeispiel außerdem die Doppelfunktion der Führungsschiene 16, die nicht nur zur Linearführung der Antriebseinheit 13 dient, sondern gleichzeitig als Tragholm für die Antriebseinheiten 13 fungiert und hierzu über eine entsprechende Steifigkeit verfügt, so dass sie in selbsttragender Bauweise realisierbar ist.

## Patentansprüche

1. Arbeitsvorrichtung, mit mindestens einer ein bewegliches Ausgangsteil (26) aufweisenden Antriebseinheit (13), die über ein Antriebsgehäuse (24) verfügt, in dem zum Antreiben des Ausgangsteils (26) dienende Antriebsmittel (36) angeordnet sind, wobei die Arbeitsvorrichtung (1) mindestens eine eine Längserstreckung aufweisende Führungsschiene (16) enthält, an der die mindestens eine Antriebseinheit (13) mittels eines in sie integrierten Führungsschlittens (34) linear verschiebbar gelagert ist, wobei das Antriebsgehäuse (24) der Antriebseinheit (13) unmittelbar einen die Führungsschiene (16) reiterartig übergreifenden Schlittengrundkörper (33) des Führungsschlittens (34) bildet, der an einer von einer Längsachse (27) des Antriebsgehäuses (24) wegweisenden Seitenfläche eine sich quer zu der Längsachse (27) erstreckende Führungsnut (38) aufweist, mit der voraus er an die Führungsschiene (16) angesetzt ist, **dadurch gekennzeichnet, dass** das Antriebsgehäuse (24) über einen sich in Achsrichtung seiner Längsachse (27) an den Schlittengrundkörper (33) anschließenden, die Antriebsmittel (36) aufnehmenden und einstückig mit dem Schlittengrundkörper (33) verbundenen Antriebsabschnitt (35) verfügt, wobei der Schlittengrundkörper (33) von mindestens einem für den Betrieb der Antriebseinheit (13) genutzten Energieübertragungskanal (84, 85, 88) durchsetzt ist, der die Führungsnut (38) passiert und zu dem Antriebsabschnitt (35) führt.

2. Arbeitsvorrichtung nach Anspruch 1, **dadurch gekennzeichnet, dass** das Antriebsgehäuse (24) einen sowohl die Antriebsmittel (36) aufnehmenden als auch den Schlittengrundkörper (33) bildenden einstückigen Gehäusegrundkörper (32) aufweist.

3. Arbeitsvorrichtung nach Anspruch 1 oder 2, **dadurch gekennzeichnet, dass** der Schlittengrundkörper (33) im Wesentlichen U-förmig gestaltet ist und eine von zwei sich gegenüberliegenden Schenkelabschnitten (45, 46) flankierte Führungsnut (38) definiert, die von der Führungsschiene (16) in Längsrichtung durchsetzt ist.

4. Arbeitsvorrichtung nach Anspruch 3, **dadurch gekennzeichnet, dass** die beiden Schenkelabschnitte (45, 46) des Schlittengrundkörpers (33) an ihren einander zugewandten Innenseiten jeweils Lagerungsmittel (53) aufweisen, die sich jeweils an mindestens einer Führungsfläche (52) abstützen, die an einander entgegengesetzten Längsseiten (47, 48) der Führungsschiene (16) angeordnet sind.

5. Arbeitsvorrichtung nach Anspruch 4, **dadurch gekennzeichnet, dass** die Führungsflächen (52) an jeder der beiden Längsseiten (47, 48) der Führungsschiene (16) eine Führungsnut (52a) definieren, in die die zugeordneten Lagerungsmittel (53) eingreifen.

6. Arbeitsvorrichtung nach Anspruch 4 oder 5, **dadurch gekennzeichnet, dass** die Lagerungsmittel (53) als in die Schenkelabschnitte (45, 46) eingesetzte Lagerungskassetten (55) ausgebildet sind, die ein Lagergehäuse (56) und in dem Lagergehäuse (56) gehaltene Wälzlagerkörper (58) aufweisen, wobei die Wälzlagerkörper (58) zweckmäßigerweise in einem Umlaufkanal (57) geführt sind.

7. Arbeitsvorrichtung nach einem der Ansprüche 1 bis 6, **dadurch gekennzeichnet, dass** die Führungsschiene (16) mindestens einen Montageabschnitt (65) aufweist, in dem sie über zwei auf gleicher axialer Höhe an einander entgegengesetzten Längsseiten (47, 48) ausgebildete Montageaussparungen (66) verfügt, die das seitliche Ansetzen und Abnehmen der Antriebseinheit (13) ermöglichen.

8. Arbeitsvorrichtung nach einem der Ansprüche 1 bis 7, **dadurch gekennzeichnet, dass** sich der mindestens eine Energieübertragungskanal (84, 85, 88) parallel zu der Längsachse (27) des Antriebsgehäuses (24) erstreckt.

9. Arbeitsvorrichtung nach einem der Ansprüche 1 bis 8, **dadurch gekennzeichnet, dass** mindestens ein Energieübertragungskanal (84, 85, 88) ein Fluidkanal ist.

10. Arbeitsvorrichtung nach einem der Ansprüche 1 bis 9, **dadurch gekennzeichnet, dass** an einer dem Antriebsabschnitt (35) entgegengesetzten Rückseite des Schlittengrundkörpers (33) dem mindestens einen Energieübertragungskanal (84, 85, 88) zugeordnete Anschlussmittel (95) angeordnet sind, die sich zweckmäßigerweise an einem rückseitig an den Schlittengrundkörper (33) angesetzten Anschlussblock (93) befinden.

11. Arbeitsvorrichtung nach einem der Ansprüche 1 bis 10, **dadurch gekennzeichnet, dass** die mindestens eine Antriebseinheit (13) vom durch Fluidkraft betätigbaren Typ ist, wobei die Antriebsmittel (36) einen mit dem Ausgangsteil (26) bewegungsgekoppelten Antriebskolben (68) aufweisen, der sich in einem in dem Antriebsgehäuse (24) ausgebildeten Antriebsraum (67) befindet, wobei der Antriebsraum (67) zweckmäßigerweise in einem einstückig mit dem Schlittengrundkörper (33) ausgebildeten Antriebsabschnitt (35) des Antriebsgehäuses (24) ausgebildet ist.

12. Arbeitsvorrichtung nach einem der Ansprüche 1 bis 11, **dadurch gekennzeichnet, dass** die mindestens eine Antriebseinheit (13) eine Linearantriebseinheit mit einem zu einer linearen Arbeitsbewegung (25) antreibbaren Ausgangsteil (26) ist.

13. Arbeitsvorrichtung nach einem der Ansprüche 1 bis 12, **dadurch gekennzeichnet, dass** mit dem Ausgangsteil (26) ein Endeffektor (14) bewegungsgekoppelt ist, wobei der Endeffektor (14) zweckmäßigerweise als Greifmittel (14a) ausgebildet ist und insbesondere als Sauggreifer.

14. Arbeitsvorrichtung nach einem der Ansprüche 1 bis 13, **dadurch gekennzeichnet, dass** die Führungsschiene (16) unmittelbar von einem einstückigen Tragholm (2) gebildet ist, der sich frei und ohne zusätzliche Stützstruktur zwischen zwei in seiner Längsrichtung zueinander beabstandeten Befestigungsschnittstellen (4) erstreckt, mittels denen er jeweils an einer Haltestruktur (5) fixierbar oder fixiert ist.

15. Arbeitsvorrichtung nach einem der Ansprüche 1 bis 14, **dadurch gekennzeichnet, dass** sie wenigstens zwei Haltestrukturen (5) aufweist, an denen die Führungsschiene (16) an zwei in ihrer Längsrichtung zueinander beabstandeten Bereichen befestigt ist, wobei die Haltestrukturen (5) jeweils in einer zur Längsachse (3) der Führungsschiene (16) rechtwinkeligen Richtung bewegbar an einer Lagereinrichtung (6) gelagert sind.

## Claims

1. Operating device with at least one drive unit (13) with a movable output section (26) and with a drive housing (24) in which are mounted drive means (36) for driving the output section (26), wherein the operating device (1) contains at least one guide rail (16) with longitudinal extent, on which the drive unit or units (13) is or are mounted with linear movement capability by means of an integral guide carriage (34), wherein the drive housing (24) of the drive unit (13) directly forms a carriage base body (33) of the guide carriage (34) overlapping the guide rail (16) in the manner of a rider and which has, on a side face pointing away from a longitudinal axis (27) of the drive housing (24), a guide slot (38) extending at right-angles to the longitudinal axis (27) and with this guide slot leading it is fixed to the guide rail (16), **characterised in that** the drive housing (24) has a drive section (35) adjoining the carriage base body (33) in the axial direction of its longitudinal axis (27), accommodating the drive means (36) and connected in one piece to the carriage base body (33), wherein at least one power transmission duct (84, 85, 88) used for operation of the drive unit (13) passes through the carriage base body (33), passes the guide slot (38) and leads to the drive section (35).

2. Operating device according to claim 1, **characterised in that** the drive housing (24) has a one-piece housing base body (32) which both accommodates the drive means (36) and also forms the carriage base body (33).

3. Operating device according to claim 1 or 2, **characterised in that** the carriage base body (33) is substantially U-shaped and defines a guide slot (38) flanked by two leg sections (45, 46) lying opposite one another and through which the guide rail (16) passes in the axial direction.

4. Operating device according to claim 3, **characterised in that** the two leg sections (45, 46) of the carriage base body (33) each have on their facing inner sides bearing means (53), each resting on one or more guide surface s (52) located on opposite long sides (47, 48) of the guide rail (16).

5. Operating device according to claim 4, **characterised in that** the guide surfaces (52) define, on each of the two long sides (47, 48) of the guide rail (16), a guide slot (52a) in which the assigned bearing means (53) engage.

6. Operating device according to claim 4 or 5, **characterised in that** the bearing means (53) are in the form of bearing cassettes (55) inserted in the leg sections (45, 46) and having a bearing housing (56) and roller bearing bodies (58) held in the bearing housing (56), wherein the roller bearing bodies (58) are expediently guided in a circulation channel (57).

7. Operating device according to any of claims 1 to 6, **characterised in that** the guide rail (16) has at least one mounting section (65) in which it has two mounting recesses (66), formed at the same axial height on opposite leg sections (45, 46), which facilitate attachment and removal of the drive unit (13) from the side.

8. Operating device according to any of claims 1 to 7, **characterised in that** the power transmission duct or ducts (84, 85, 88) extend(s) parallel to the longitudinal axis (27) of the drive housing (24).

9. Operating device according to any of claims 1 to 8, **characterised in that** at least one power transmission duct (84, 85, 88) is a fluid passage.

10. Operating device according to any of claims 1 to 9 **characterised in that**, provided on a rear side of the carriage base body (33) opposite the drive section (35) are connection means (95) assigned to the power transmission duct or ducts and expediently located on a connection block (93) attached to the rear of the carriage base body (33).

11. Operating device according to any of claims 1 to 10, **characterised in that** the drive unit or units (13) is or are of the type actuable by fluid power, wherein the drive means (36) have a driving piston (68) movement-coupled to the output section (26) and located in a drive chamber (67) formed in the drive housing (24), wherein the drive chamber (67) is expediently formed in a drive section (35) of the drive housing (24) forming one piece with the carriage base body (33).

12. Operating device according to any of claims 1 to 11, **characterised in that** the drive unit or units (13) is or are a linear drive unit or units with an output section (26) which may be driven to perform a linear operating movement (25).

13. Operating device according to any of claims 1 to 12, **characterised in that** an end effector (14) is movement-coupled to the output section (26), wherein the end effector (14) is expediently in the form of gripping means (14a) and in particular a suction gripper.

14. Operating device according to any of claims 1 to 13, **characterised in that** the guide rail (16) is formed directly by a one-piece support arm (2) extending freely and with no additional support structure between two mounting interfaces (4) spaced apart in its axial direction, by means of which it may be or is fixed in each case to a holding structure (5).

15. Operating device according to any of claims 1 to 14, **characterised in that** it has at least two holding structures (5) to which the guide rail (16) is fastened at two areas spaced apart in their axial direction, wherein the holding structures (5) are each mounted on a bearing fixture (6) and are movable in a direction at right-angles to the longitudinal axis (3) of the guide rail (16).

## Revendications

1. Dispositif de travail avec au moins une unité d'entraînement (13) présentant une partie de sortie (26) mobile qui dispose d'un boîtier d'entraînement (24), dans lequel sont disposés des moyens d'entraînement (36) servant à l'entraînement de la partie de sortie (26), le dispositif de travail (1) contenant au moins un rail de guidage (16) présentant une étendue longitudinale, sur lequel l'au moins une unité d'entraînement (13) est logée de manière mobile linéairement à l'aide d'un chariot de guidage (34) intégré dans celle-ci, le boîtier d'entraînement (24) de l'unité d'entraînement (13) formant directement un corps de base de chariot (33) recouvrant comme un cavalier le rail de guidage (16) du chariot de guidage (34) qui présente, sur une surface latérale éloignée d'un axe longitudinal (27) du boîtier d'entraînement (24), une rainure de guidage (38) s'étendant transversalement à l'axe longitudinal (27), avec laquelle il est placé au préalable sur le rail de guidage (16), **caractérisé en ce que** le boîtier d'entraînement (24) dispose d'une section d'entraînement (35) contiguë dans le sens axial de son axe longitudinal (27) au corps de base de chariot (33), recevant les moyens d'entraînement (36) et reliée d'un seul tenant au corps de base de chariot (33), le corps de base de chariot (33) étant traversé par au moins un canal de transmission d'énergie (84, 85, 88) utilisé pour le fonctionnement de l'unité d'entraînement (13), qui passe la rainure de guidage (38) et mène à la section d'entraînement (35).

2. Dispositif d'entraînement selon la revendication 1, **caractérisé en ce que** le boîtier d'entraînement (24) présente un corps de base de boîtier (32) d'un seul tenant recevant non seulement les moyens d'entraînement (36) mais formant aussi le corps de base de chariot (33).

3. Dispositif d'entraînement selon la revendication 1 ou 2, **caractérisé en ce que** le corps de base de chariot (33) est conçu sensiblement en U et définit une rainure de guidage (38) flanquée de deux sections de branche opposées (45, 46), qui est traversée par le rail de guidage (16) dans le sens longitudinal.

4. Dispositif d'entraînement selon la revendication 3, **caractérisé en ce que** les deux sections de branche (45, 46) du corps de base de chariot (33) présentent sur leurs côtés intérieurs tournés l'un vers l'autre respectivement des moyens de logement (53) qui s'appuient respectivement contre au moins une surface de guidage (52), qui sont disposés sur des côtés longitudinaux (47, 48) opposés du rail de guidage (16).

5. Dispositif d'entraînement selon la revendication 4, **caractérisé en ce que** les surfaces de guidage (52) définissent, sur chacun des deux côtés longitudinaux (47, 48) du rail de guidage (16), une rainure de guidage (52a), dans laquelle les moyens de logement associés (53) s'engagent.

6. Dispositif d'entraînement selon la revendication 4 ou 5, **caractérisé en ce que** les moyens de logement (53) sont réalisés comme des cassettes de logement (55) insérées dans les sections de branche (45, 46) qui présentent un boîtier de palier (56) et des corps de palier à roulement (58) maintenus dans le boîtier de palier (56), les corps de palier à roulement (58) étant guidés de manière appropriée dans un canal périphérique (57).

7. Dispositif d'entraînement selon l'une quelconque des revendications 1 à 6, **caractérisé en ce que** le rail de guidage (16) présente au moins une section de montage (65), dans laquelle il dispose de deux évidements de montage (66) réalisés sur des côtés longitudinaux (47, 48) opposés à la même hauteur axiale, qui permettent le placement et le retrait latéraux de l'unité d'entraînement (13).

8. Dispositif d'entraînement selon l'une quelconque des revendications 1 à 7, **caractérisé en ce que** l'au moins un canal de transmission d'énergie (84, 85, 88) s'étend parallèlement à l'axe longitudinal (27) du boîtier d'entraînement (24).

9. Dispositif d'entraînement selon l'une quelconque des revendications 1 à 8, **caractérisé en ce qu'**au moins un canal de transmission d'énergie (84, 85, 88) est un canal fluidique.

10. Dispositif d'entraînement selon l'une quelconque des revendications 1 à 9, **caractérisé en ce que** des moyens de raccordement (95) associés à l'au moins un canal de transmission d'énergie (84, 85, 88) sont disposés sur un côté arrière opposé à la section d'entraînement (35) du corps de base de chariot (33), lesquels se trouvent de manière appropriée sur un bloc de raccordement (93) placé côté arrière sur le corps de base de chariot (33).

11. Dispositif d'entraînement selon l'une quelconque des revendications 1 à 10, **caractérisé en ce que** l'au moins une unité d'entraînement (13) est de type actionnable par la force fluidique, les moyens d'entraînement (36) présentant un piston d'entraînement (68) couplé en mouvement avec la partie de sortie (26), qui se trouve dans un espace d'entraînement (67) réalisé dans le boîtier d'entraînement (24), l'espace d'entraînement (67) étant réalisé de manière appropriée dans une section d'entraînement (35) réalisée d'un seul tenant avec le corps de base de chariot (33) du boîtier d'entraînement (24).

12. Dispositif d'entraînement selon l'une quelconque des revendications 1 à 11, **caractérisé en ce que** l'au moins une unité d'entraînement (13) est une unité d'entraînement linéaire avec une partie de sortie (26) pouvant être entraînée en un mouvement de travail linéaire (25).

13. Dispositif d'entraînement selon l'une quelconque des revendications 1 à 12, **caractérisé en ce qu'**un effecteur final (14) est couplé en mouvement avec la partie de sortie (26), l'effecteur final (14) étant réalisé de manière appropriée comme des moyens de préhension (14a) et en particulier comme une pince aspirante.

14. Dispositif d'entraînement selon l'une quelconque des revendications 1 à 13, **caractérisé en ce que** le rail de guidage (16) est constitué directement d'un bras porteur (2) d'un seul tenant qui s'étend librement et sans structure d'appui supplémentaire entre deux interfaces de fixation (4) espacées dans son sens longitudinal, à l'aide desquelles il est ou peut être fixé respectivement sur une structure de retenue (5).

15. Dispositif d'entraînement selon l'une quelconque des revendications 1 à 14, **caractérisé en ce qu'**il présente au moins deux structures de retenue (5), sur lesquelles le rail de guidage (16) est fixé sur deux zones espacées dans leur sens longitudinal, les structures de retenue (5) étant logées respectivement de manière mobile dans un sens perpendiculaire à l'axe longitudinal (3) du rail de guidage (16) sur un dispositif de palier (6).
